# EUROPEAN PATENT SPECIFICATION

(11) **EP 3 564 494 B1**
(45) Date of publication and mention of the grant of the patent: **30.06.2021**
(21) Application number: 19171470.8
(22) Date of filing: 26.04.2019
(51) Int. Cl.: F01D 25/16, F04D 29/057, F16C 17/02, F16C 27/02

(54) **TURBOCHARGER BEARING HOUSING WITH NON-CIRCULAR BEARING BORES**
TURBOLADERLAGERGEHÄUSE MIT NICHTKREISFÖRMIGEN LAGERBOHRUNGEN
CARTER DE PALIER DE TURBOCOMPRESSEUR COMPORTANT DES ALÉSAGES DE PALIER NON CIRCULAIRES

(30) Priority: 30.04.2018 US 201815966838
(43) Date of publication of application: 06.11.2019
(73) Proprietor: BorgWarner Inc., Auburn Hills, MI 48326 (US)
(72) Inventor: BISCHOF, Kenneth R., Arden, NC 28704 (US); ASHTON, Zachary S., Arden, NC 28704 (US)
(74) Representative: Peterreins Schley

(56) References cited:
- EP-A1- 2 693 017
- DE-A1-102010 052 892
- US-A1- 2017 159 708

## Description

### TECHNICAL FIELD

This disclosure relates to turbochargers and, in particular, bearing housings for turbochargers.

### BACKGROUND

A turbocharger is a forced induction device, which supplies compressed air to an internal combustion engine associated therewith. A turbocharger may include a turbine, which is rotated by exhaust gas from the engine, and a compressor, which is rotated by the turbine to compress the air supplied to the engine. The turbine and the compressor are connected to each other be a shaft and rotate at high rotational speeds, which may create vibrations and/or heat.

EP 2 693 017 A1 discloses a turbocharger and a method of manufacturing a floating bush with which noise can be reduced, and the rotation speed can be increased. The turbocharger has a rotating shaft with a circular cross-section and connecting a turbine rotor and a compressor rotor. The rotating shaft is supported in a freely rotatable manner at two axially separated positions via floating bushes. An inner circumferential surface of a bearing housing surrounds the floating bushes. An inner circumferential surface of each of the floating bushes supporting the shaft has a non-circular shape in which the curvature of the cross-sectional shape varies in the circumferential direction.

### SUMMARY

The present invention refers to a turbocharger as claimed in claim 1. The dependent claims provide preferred embodiments of the turbocharger. The turbocharger according to the present invention includes a compressor wheel, a shaft, a bearing housing, and a floating ring. The shaft is coupled to the compressor wheel and extends through the bearing housing. The bearing housing includes an inner housing surface extending circumferentially around the shaft. The inner housing surface comprises an axially central region surrounded by first and second axially outer regions. The floating ring rotatably supports the shaft in the bearing housing and rotates relative to the bearing housing and the shaft. The floating ring includes an outer bearing surface that extends circumferentially around the shaft and that faces the inner peripheral housing surface. The inner housing surface has a geometry that varies in radial dimension moving circumferentially about the axis of the bearing housing and also moving axially there along, wherein the inner housing surface is formed of a rigid material and has an inner housing cross-sectional shape that in the first axially outer region of the inner housing surface is non-circular perpendicular to the axis, decreases in area moving axially toward a first axial end, and forms a first outer fluid film interface with the outer bearing surface of the floating ring. The inner housing cross-sectional shape includes peaks and valleys that extend axially toward the first axial end, wherein in the first axially outer region, the peaks have a peak radial dimension measured from the axis that is constant moving axially toward the first axial end, and the valleys have a valley radial dimension measured from the axis that is greater than the peak radial dimension and that reduces moving axially toward the first axial end.

In an implementation, a turbocharger includes a turbine, a compressor, a shaft, a bearing housing, and a floating journal bearing. The turbine includes a turbine housing and a turbine wheel in the turbine housing. The compressor includes a compressor housing and a compressor wheel in the compressor housing. The shaft rotatably couples the turbine wheel to the compressor wheel and includes an outer shaft surface. The bearing housing is positioned between the turbine housing and the compressor housing, and has the shaft extending therethrough. The bearing housing has an inner housing surface with a cross-sectional shape that is non-circular and that varies in size moving along an axis of the shaft. The floating journal bearing is positioned radially between and is rotatable independent of the inner housing surface and the outer shaft surface. The floating journal bearing includes an outer bearing surface. A first fluid film interface is formed between the inner housing surface and the outer bearing surface.

In an implementation, a turbocharger includes a shaft, a bearing housing, and a bearing. The shaft is coupled to a turbine wheel and a compressor wheel at opposite ends thereof. The bearing housing includes an inner housing surface with a radial dimension that varies moving circumferentially about an axis thereof and moving axially there along. The inner housing surface defines a first bore. The bearing includes an outer bearing surface with another radial dimension that is constant moving circumferentially about another axis thereof and moving axially there along. The inner bearing surface defines a second bore. The bearing is positioned in the first bore. The shaft extends through the second bore. A first fluid film interface is formed between the inner housing surface and the outer bearing surface. A second fluid film interface is formed between the inner housing surface and the shaft. The bearing rotates independent of the bearing housing and the shaft.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is a cross-sectional schematic view of an exemplary embodiment of a turbocharger.
FIG. 2 is a cross-sectional schematic view of the turbocharger taken along line 2-2 in FIG. 1.
FIG. 3 is a cross-sectional schematic view of the turbocharger taken along line 3-3 in FIG. 1.
FIG. 4 is a cross-sectional schematic view of the turbocharger taken along line 2-2 in FIG. 1.
FIG. 5 is a cross-sectional schematic view of the turbocharger taken along line 5-5 in FIG. 1.
FIG. 6 is a superimposition of the cross-sectional schematic views of portions the turbocharger shown in FIG. 2 (shown in solid lines), FIG. 3 (shown in long dashed lines), FIG. 4 (shown in short dashed lines), and FIG. 5 (shown in dash-dot lines).
FIG. 7A is a plot of angular position vs. axial position of a peak of an inner surface of a bearing housing of the turbocharger of shown in FIG. 1.
FIG. 7B is a plot of angular position vs. axial position of another peak of another inner surface of another bearing housing that may be used in the turbocharger of shown in FIG. 1.
FIG. 7C is a plot of angular position vs. axial position of another peak of another inner surface of another bearing housing that may be used in the turbocharger of shown in FIG. 1.
FIG. 7D is a plot of angular position vs. axial position of another peak of another inner surface of another bearing housing that may be used in the turbocharger of shown in FIG. 1.
FIG. 7E is a plot of angular position vs. axial position of another peak of another inner surface of another bearing housing that may be used in the turbocharger of shown in FIG. 1.
FIG. 8 is a cross-sectional schematic view of another embodiment of a turbocharger.

### DETAILED DESCRIPTION

As discussed in further detail below, the present disclosure is directed to a bearing system for a turbocharger and a turbocharger comprising the same. The bearing system generally includes a bearing housing and a journal bearing, which cooperatively support a rotatable shaft. The bearing housing forms a fluid film interface with the journal bearing therein using a bore geometry that varies in radial dimension moving circumferentially about an axis thereof (e.g., being non-circular in cross-section) and moving axially there along. By varying the radial dimension moving axially, the bearing system may provide improved stability and reduce noise as compared to bearing systems that do not vary in radial dimension moving axially and may also control fluid flow for cooling and/or lubrication. The journal bearing forms another fluid film interface with the shaft therein, which may also use a bore geometry that varies in radial dimension moving circumferentially about an axis thereof and/or varies in radial dimension moving axially there along.

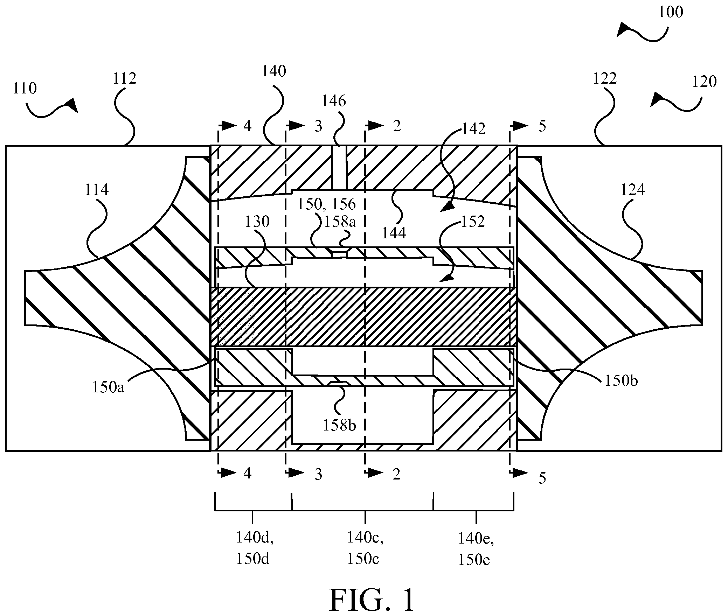

Referring to FIG. 1, a turbocharger 100 generally includes a turbine 110 and a compressor 120. The turbine 110 generally includes a turbine housing 112 and a turbine wheel 114. The compressor 120 generally includes a compressor housing 122 and a compressor wheel 124. The compressor wheel 124 is connected to the turbine wheel 114 with a shaft 130 to be rotated thereby. More particularly, the turbine 110 receives exhaust gas from an internal combustion engine (not shown), which rotates the turbine wheel 114 and, in turn, rotates the compressor wheel 124 to compress air for supply to the engine.

The turbocharger 100 additionally includes a bearing system having a bearing housing 140 and a journal bearing 150. The bearing housing 140 and the journal bearing 150 cooperatively rotatably support the shaft 130. The bearing housing 140 is arranged axially (e.g., in an axial direction) between and is coupled to turbine housing 112 and the compressor housing 122, for example, with threaded fasteners (not shown). The journal bearing 150 is arranged radially (i.e., in a radial direction) between the shaft 130 and the journal bearing 150. The axial direction is parallel with an axis 134 of the shaft 130 (and/or axes of the bearing housing 140 and the journal bearing 150, which are generally the same as the axis 134 of the shaft 130), while the radial direction is perpendicular to the axis 134.

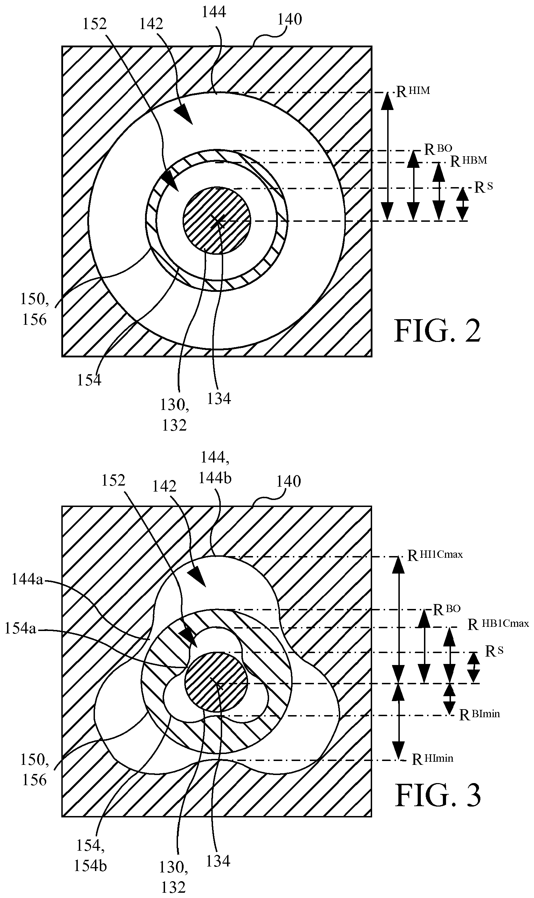

Referring additionally to FIG. 2, the bearing housing 140 defines a bore 142 in which the journal bearing 150 and the shaft 130 are positioned and rotate. More particularly, the bearing housing 140 includes an inner housing surface 144 that defines at least a portion of the bore 142 and that rotatably supports the journal bearing 150 therein. The inner housing surface 144 extends circumferentially entirely around an axis of the bearing housing 140. Fluid, such as oil received from the engine, forms outer fluid film interfaces (e.g., oil film interface) between the inner housing surface 144 and an outer bearing surface 156 of the journal bearing 150 (as discussed in further detail below) on left and right sides of the bearing system to, thereby, rotatably support the journal bearing 150 within the bearing housing 140. As discussed in further detail below, the inner housing surface 144 includes a geometry that may provide various functional benefits relating, for example, to stability, noise, vibration, speed, and/or fluid routing. The inner housing surface 144 may also be referred to as an inner peripheral surface, an inner circumferential surface, an inner peripheral housing surface, or an inner circumferential housing surface. The outer bearing surface 156 may also be referred to as an outer peripheral surface, an outer circumferential surface, an outer peripheral bearing surface, or an outer housing circumferential surface. The bore 142 may also be referred to as a cavity or a housing bore. The inner housing surface 144 may also be referred to as an inner peripheral surface, an inner peripheral housing surface, an inner housing bearing surface, or similar.

The bearing housing 140 is additionally configured to receive and distribute a fluid (e.g., oil from the engine) for lubricating and/or cooling various components within the bearing housing 140, such as the shaft 130 and the journal bearing 150. A fluid circuit may be cooperatively formed by various features of the bearing housing 140 and the journal bearing 150. For example, the bearing housing 140 includes a fluid passage 146 that is connectable to a fluid source (not shown), such as an oil pump associated with an oil circulation system of the engine, for receiving the fluid into the bearing housing 140. The fluid passage 146 extends radially inward to form a fluid outlet by which the fluid flows through the inner housing surface 144 into the bore 142. The outlet of the fluid passage 146 may be referred to as a housing outlet. The fluid passage 146 thereby communicates the fluid into the bore 142 of the bearing housing 140 to form the outer fluid film interfaces between the inner housing surface 144 of the bearing housing 140 and the outer bearing surface 156 of the journal bearing 150. As discussed in further detail below, the outlet of the fluid passage 146 may be located in an intermediate region between a first axial end 150a (e.g., near the turbine 110) and a second axial end 150b (e.g., near the compressor 120) of the journal bearing 150. The fluid received in the bore 142 may then flow between the inner housing surface 144 and the outer bearing surface 156 in opposite axial directions toward a first axial end 150a of the journal bearing 150 and a second axial end 150b of the journal bearing 150 and/or may flow radially inward through the journal bearing 150 to radially between the journal bearing 150 and the shaft 130.

The bearing housing 140 is a singular component or may be a multi-piece assembly, for example, being formed from a cast metal material (e.g., an aluminum or steel alloy). The inner housing surface 144 is formed by a rigid material, such as the cast metal material otherwise forming the bearing housing 140, so as to not deflect under radial loading thereof by the journal bearing 150 (e.g., the inner housing surface 144 generally does not provide compliance for radial movement of the shaft 130).

The journal bearing 150 is configured as a floating journal bearing that surrounds the shaft 130 and is arranged radially between the shaft 130 and the bearing housing 140. The journal bearing 150 is generally cylindrical and includes a bore 152 through which the shaft 130 extends. The journal bearing 150, by being a floating journal bearing, may rotate independent of the shaft 130 and the bearing housing 140. The outer fluid film interfaces are formed between the inner housing surface 144 and the outer bearing surface 156 of the journal bearing 150, and inner fluid film interfaces are formed between an inner bearing surface 154 that defines the bore 152 of the journal bearing 150 and an outer shaft surface 132 of the shaft 130. The outer bearing surface 156 and the inner bearing surface 154 each extend circumferentially entirely around an axis of the journal bearing 150. As discussed in further detail below, the inner bearing surface 154 includes a geometry that may provide various functional benefits relating, for example, to stability, noise, vibration, speed, and/or fluid routing. The inner bearing surface 154 may also be referred to as an inner peripheral surface, an inner circumferential surface, an inner peripheral bearing surface, or an inner circumferential bearing surface.

As referenced above, the journal bearing 150 rotates independent of the shaft 130 and the bearing housing 140. Rotation of the journal bearing 150 is caused by rotation of the shaft 130 (e.g., at high speeds) as torque is transferred therebetween (e.g., from shearing of the fluid forming the second fluid film interface therebetween). The journal bearing 150 rotates at a slower speed relative to the bearing housing 140 than does the shaft 130, for example, at 15-20% of the speed of the shaft 130 depending on operating conditions (e.g., temperature and/or speed). The journal bearing 150 may also be referred to as a floating ring, floating bearing, or floating ring bearing.

The journal bearing 150 is additionally configured to receive and distribute fluid for lubricating and/or cooling various components, such as the shaft 130 and the journal bearing 150. The journal bearing 150 may include a fluid passage 158a that extends radially from the outer bearing surface 156 to the inner bearing surface 154. The fluid may thereby flow from the bore 142 of the bearing housing 140 (i.e., from between the inner housing surface 144 and the outer bearing surface 156) into the bore 152 of the journal bearing 150 to form the inner fluid film interfaces between inner bearing surface 154 and the outer shaft surface 132 of the shaft 130. The journal bearing 150 may, in some embodiments, additionally include a circumferential channel 158b in the outer bearing surface 156 extending circumferentially therearound. The circumferential channel 158b may be axially aligned with both the outlet of the fluid passage 146 of the bearing housing 140 and the fluid passage 158a of the journal bearing 150, so as to maintain fluidic communication between the fluid outlet 146c and the fluid passage 158a even as the journal bearing 150 rotates relative to the bearing housing 140. The fluid received in the bore 152 of the journal bearing 150 may then flow between the inner bearing surface 154 and the outer shaft surface 132 in opposite axial directions toward the first axial end 150a of the journal bearing 150 and the second axial end 150b of the journal bearing 150.

The journal bearing 150 is a singular component, or may be a multi-piece assembly, formed by a rigid material, such as an extruded or cast metal material (e.g., an aluminum or steel alloy). The inner bearing surface 154 is formed by a rigid material, such as the extruded or cast metal material otherwise forming the journal bearing 150 (e.g., to generally not deflect under radial loading from the shaft 130). The journal bearing 150 may also be referred to as a ring, a floating bearing, a floating journal bearing, or a floating ring.

As referenced above, the inner housing surface 144 of the bearing housing 140 includes a geometry (e.g., a housing bore geometry) that may provide various advantages as compared to a conventional geometry. The inner bearing surface 154 of the journal bearing 150 may also include a geometry (e.g., a bearing bore geometry) that may also provide various advantages as compared to the conventional geometry. A conventional bore geometry may instead be constant in radial dimension moving circumferentially (i.e., being entirely circular) and axially (i.e., being cylindrical).

### Bearing Housing Geometry

Referring to FIG. 1 and additionally to FIGS. 2-6, the inner housing surface 144 has a geometry that varies in radial dimension moving circumferentially about the axis of the bearing housing 140 and also moving axially there along. The inner bearing surface 154 of the journal bearing 150 may also vary in radial dimension moving circumferentially about the axis thereof and/or moving axially there along.
For example, referring to FIGS. 1 and 2, the bearing housing 140 includes a axially central region 140c (e.g., a non-bearing region) that does not support the journal bearing 150 (e.g., does not form the outer fluid film interface) that is surrounded by first and second axially outer regions 140d, 140e (e.g., bearing regions) that support the journal bearing 150 by forming the outer fluid film interfaces (e.g., left and right fluid film interfaces as shown). In the axially central region 140c of the bearing housing 140, the inner housing surface 144 has an inner dimension and define a cross-sectional area that is larger than dimensions of the first and second axially outer regions 140d, 140e. For example, the inner housing surface 144 may have a radius R_{HIM} that is constant moving circumferentially around the axis 134 and moving axially there along (e.g., between 25% and 75% of an axial length of the journal bearing 150, such as between 40% and 60% (e.g., approximately 50%). Moving axially from the axially central region 140c to each of the first and second axially outer regions 140d, 140e, the inner housing surface 144 may change in radial dimension abruptly, such as in a stepped manner.

In the dimensional nomenclature below for radial dimensions R, the first letter of the suffix generally refers to the component (e.g., "H" refers to the bearing housing 140, "B" refers to the journal bearing 150, and "S" refers to the shaft 130), the second letter generally refers to the surface (e.g., "I" refers to an inner surface, such as the inner housing surface 144, and "O" refers to an outer surface, such as the outer bearing surface 156 of the journal bearing 150), the third character generally refers to the axially-extending region (e.g., "M" refers to the central region or position between the turbine 110 and the compressor 120; "1" refers to a first axially outer region, such as the first axially outer region 140d, on a first, left, or turbine side of the journal bearing 150 relative to the middle position; "2" refers to a second axially outer region, such as the second axially outer region 140e, on a second, right, or compressor side of the journal bearing 150 relative to the middle position), the fourth character generally refers to the axial position within a region (e.g., "E" refers to a position at or near an end, such as the first and second axial ends 150a, 150b; "C" refers to a central position, such as at or near the axially central region 140c), and "max" and "min" refer to the maximum and minimum radial dimensions of the component at the specified location. Similarly, in the dimensional nomenclature below for the cross-sectional areas A, the first letter refers to the component (see above), the second letter refers to the surface (see above), and the third character refers to the axial region (see above). Letters, numbers, or characters may be omitted where not applicable (e.g., if no variation between circumferential and/or radial positions).

### Circumferentially-Varying Geometry of the Bearing Housing

With the radial dimension of the bore geometry varying moving circumferentially, the bore geometry may also be referred to as having a circumferentially-varying radial dimension, which results in the cross-sectional shape (e.g., the cross-sectional area) of the inner housing surface 144 being non-circular. The cross-sectional shapes discussed herein are taken perpendicular to the axis of the shaft 130. According to the invention, the inner housing surface 144 (e.g., the cross-sectional shape or cross-sectional area thereof) includes a series of peaks 144a and valleys 144b having smaller and larger radial dimensions, respectively, measured from the axis 134 of rotation of the shaft 130. The radial dimension of the peaks 144a may be referred to as a peak radial dimension or minimum radial dimension, and the radial dimension of the valleys 144b may also be referred to as a valley radial dimension or maximum radial dimension. The peaks 144a and the valleys 144b alternate circumferentially and extend axially over a majority (e.g., an entirety) of the axial distance of the first axially outer region 140d (e.g., between the first axial end 150a of the journal bearing 150 and the axially central region 140c of the bearing housing 140, such as on the turbine side) and also the second axially outer region 140e (e.g., between the second axial end 150b and the axially central region 140c, such as on the compressor side of the journal bearing 150). As a result, each of the peaks 144a forms an axially-extending ridge, and each of the valleys 144b forms an axially-extending trough. The outer fluid film interfaces are formed between the peaks 144a of the inner housing surface 144 and the outer bearing surface 156 (e.g., two outer film interfaces, one in the first axially outer region 140d and another in the second axially outer region 140e).

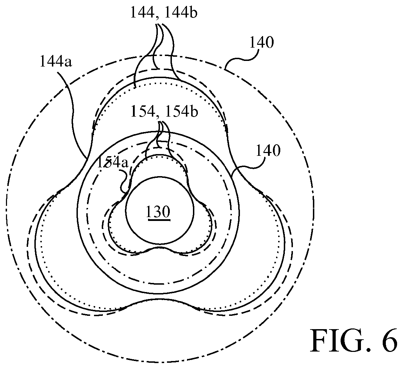

As shown, the inner housing surface 144 may include three of the peaks 144a and three of the valleys 144b therebetween, but may include fewer (e.g., two) or more (e.g., four, five, or more). The peaks 144a and/or the valleys 144b may also be referred to as lobes. For illustrative purposes, the radial dimensions of the bearing housing 140 are depicted in an exaggerated manner, and FIG. 6 superimposes the cross-sectional shape of the various components of the turbocharger 100 to illustrate the different radial dimensions at different axial positions. As discussed blow, the radial dimension may vary at each axial location (e.g., the difference between the radial dimensions of the peak 144a and the valley 144b at one axial position) by between 2 and 50 microns, or other suitable amount.

This circumferentially-varying radial dimension of the inner housing surface 144 may, as compared to the conventional geometry, reduce vibrations (e.g., sub-synchronous vibrations), reduce noise, control bearing temperature, increase rotational speed of the shaft 130, and/or increased stability at high rotational speeds of the shaft 130, as compared to conventional geometries of bearing housings and/or journal bearings. Sub-synchronous vibrations refer to vibrations causes by the journal bearing 150 rotating at a slower speed than the shaft 130.

Further, this circumferentially-varying radial geometry of the inner housing surface 144 may also control flow of the fluid. As shown by comparing the cross-sectional views in FIGS. 3-6, the peaks 144a and the valleys 144b of the inner housing surface 144 are at the same angular position at different axial positions, such that the axially-extending ridges formed by the peaks 144a and the axially-extending troughs formed by the valleys 144b each extend parallel with the axis. As a result, rotation of the journal bearing 150 relative to the bearing housing 140 applies force to the fluid therebetween in a substantially circumferential direction without a significant axial component, such that fluid pressure but not rotation of the journal bearing 150, causes the fluid to flow axially toward the first axial end 150a and the second axial end 150b.

Alternatively, the peaks 144a and the valleys 144b of the inner housing surface 144 may be at different angular positions at different axial positions, such that the axially-extending ridges formed by the peaks 144a and the axially-extending troughs formed by the valleys 144b each extend at least partially circumferentially around the axis 134. As the journal bearing 150 is rotated, an axial force is applied by the peaks 144a to push the fluid toward or away from the first axial end 150a and/or the second axial end 150b. For example, the peaks 144a may extend circumferentially between 5 degrees and 90 degrees from the first axial end 150a to the second axial end 150b.

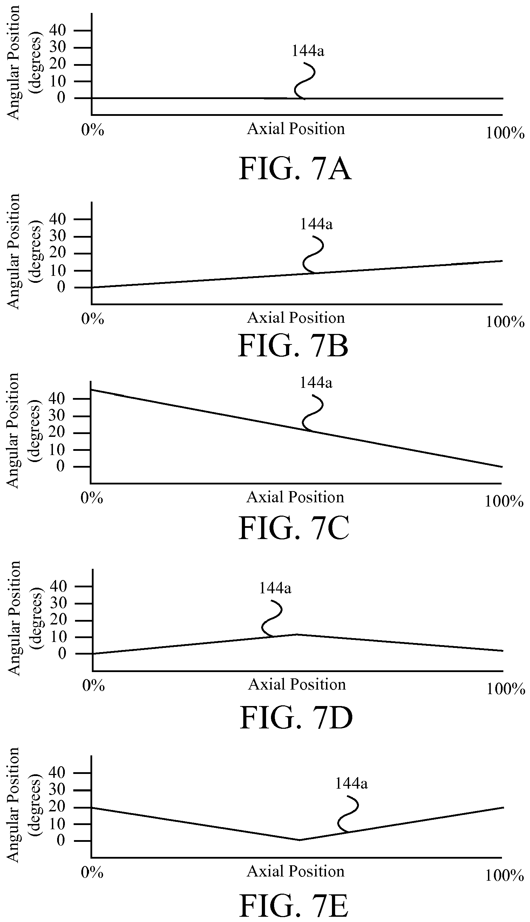

Referring to FIGS. 7A-7E, the angular position of each peak 144a is plotted against the axial position represented as a percentage of the axial distance within the first and second axially outer regions 140d, 140e (e.g., between the first axial end 150a or the second axial end 150b and the axially central region 140c), so as to illustrate the angular position of the ridge formed thereby relative to the axial position. As shown in FIG. 7A, the peaks 144a do not extend circumferentially (i.e., as shown in FIGS. 2-6). As shown in FIG. 7B, the peaks 144a extend circumferentially 20 degrees from the first axial end 150a to the second axial end 150b in the same direction of rotation as the journal bearing 150 (i.e., rolling down the page as shown), such that the fluid is pushed axially toward the second axial end 150b. As shown in FIG. 7C, the peaks 144a extend circumferentially 45 degrees from the second axial end 150b to the first axial end 150a in the same direction of rotation as the journal bearing 150 (i.e., rolling down the page as shown), such that the fluid is pushed axially toward the second axial end 150b. As shown in FIG. 7D, the peaks 144a extend circumferentially 10 degrees from an intermediate position to the first axial end 150a and the second axial end 150b in the direction of rotation, such that the fluid is pushed axially outward from the intermediate region to each of the first axial end 150a and the second axial end 150b. As shown in FIG. 7E, the peaks 144a extend circumferentially 20 degrees from each of the first axial end 150a to the second axial end 150b in the direction of rotation, such that the fluid is pushed axially inward from the first axial end 150a and the second axial end 150b (e.g., to retain fluid in the bore 142).

### Axially-Varying Geometry of the Bearing Housing

With the radial dimension of the bore geometry varying moving axially, the bore geometry of the inner housing surface 144 (e.g., the inner housing cross-sectional shape) may also be referred to as having an axially-varying radial dimension. More particularly, by reducing the maximum radial dimension of the inner housing surface 144 (i.e., the dimension of the valleys 144b) moving axially toward the first axial end 150a (e.g., on the turbine side) and/or the second axial end 150b, greater stability may be provided to the bearing system and reduced noise may be achieved as compared conventional bearing geometries. The minimum radial dimension of the inner housing surface 144 (i.e., the dimensions of the peaks 144a) may be constant in the first and second axially outer regions 140d, 140e. Further, by having the maximum dimension of the inner housing surface 144 reduce to a smaller dimension on one side (e.g., the first axially outer region 140d, such as the turbine side) as compared to the other (e.g., the second axially outer region 140e, such as the compressor side), the bore geometry allows the flow of fluid to be biased more toward the first axial end 150a or the second axial end 150b. For example, with the bore geometry having an axially-varying radial dimension, the cross-sectional shape of the inner housing surface 144 may have an area that varies moving axially (e.g., decreases moving axially outward), which may be referred to as an axially-varying cross-sectional area. The different areas allow unequal biasing of fluid flow between the first axial end 150a of the journal bearing 150 and the second axial end 150b of the journal bearing 150. That is, the fluid may flow in an axial direction between the inner housing surface 144 and the outer bearing surface 156 at uneven flow rates toward the first axial end 150a and the second axial end 150b. This uneven flow may be advantageous to control cooling of various components of the turbocharger 100 and to control a temperature of the fluid to limit rotational friction between the inner housing surface 144 and the outer bearing surface 156 (e.g., due to shearing of the fluid) and/or prevent oil burning (e.g., due to too high a temperature).

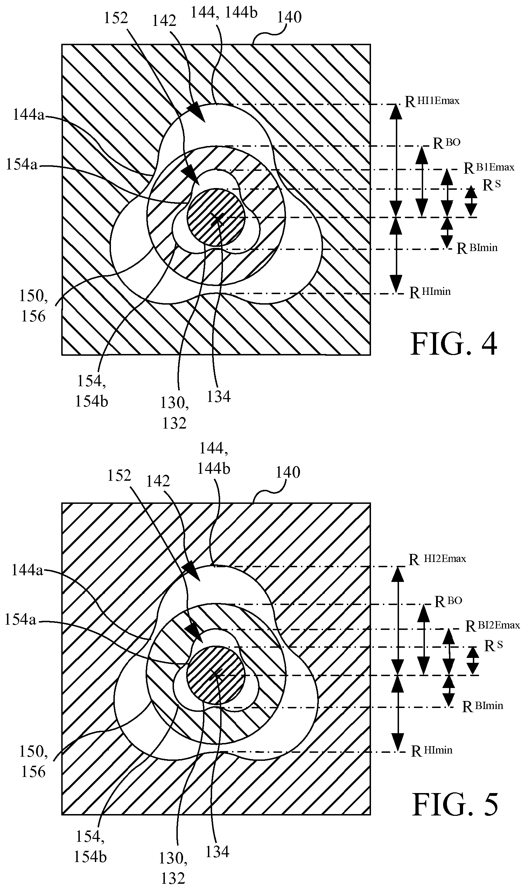

The axially-varying radial dimension and the axially-varying cross-sectional area are illustrated by comparing the cross-sectional views of FIG. 3 (taken at a central position in the first axially outer region 140d), FIG. 4 (taken at an end position in the first axially outer region 140d), FIG. 5 (taken at an end position in the second axially outer region 140e, such as the right or compressor side), and FIG. 6 (superimposition of the cross-sections of FIGS. 2-5).

FIG. 3 is a cross-sectional view of the turbocharger 100 taken in the first axially outer region 140d at a at a central position adjacent to the axially central region 140c (e.g., non-bearing region). The first axially outer region 140d may instead be on a compressor side of the turbocharger 100. At this central axial position, the inner housing surface 144 has a maximum radial dimension R_{HI1Cmax} measured from the axis 134 at one or more of the valleys 144b (e.g., all) and a minimum radial dimension R_{HImin} at one or more (e.g., all) of the peaks 144a. A difference between the maximum radial dimension R_{HI1Emax} and the minimum radial dimension R_{H1min} may, for example, be between 25 and 50 microns, or other suitable dimensions.

In the first axially outer region 150d, the maximum radial dimension R_{HI1max} (i.e., of the valleys 144b) of the inner housing surface 144 may be highest at the central position as compared to any other axial position. Thus, moving axially from the central axial position toward the first axial end 150a, the maximum radial dimension R_{HI1max} may decrease and/or stay constant. For example, as shown, the maximum radial dimension R_{HI1max} decreases moving from the central position toward the first axial end 150a of the journal bearing 150.

The minimum radial dimension R_{HI1min} of the inner housing surface 144 may, as shown, be constant over the axial distance of the journal bearing 150 (i.e., be the same at each axial position).

As a result of the maximum radial dimension R_{HImax} being highest at the central position and the minimum radial dimension R_{HImin} staying constant, the cross-sectional area A_{HI1} of the inner housing surface 144 (e.g., an inner housing cross-sectional area) in the first axially outer region 140d may also be highest at the central position. Further, as a result of the maximum radial dimension R_{HImax} decreasing moving from the central position and the minimum radial dimension R_{HImin} staying constant, the cross-sectional area A_{HIM} defined within the inner housing surface 144 decreases moving from the central axial position axially toward the first axial end 150a. Thus, the cross-sectional area of the inner housing surface 144 varies in size between the central position and the end position (proximate the first axial end 150a) on the first (e.g., left or turbine) bearing region.

FIG. 4 is a cross-sectional view of the turbocharger 100 taken at a first end position on a first axial side of the bore 142 of the bearing housing 140. The first end position may be the position where the maximum radial dimension R_{HImax} is least on the first side of the bore 142. That is, the maximum radial dimension R_{HImax} reduces from its greatest value R_{HI1Cmax} at the central position to its lowest value on the first side of the bore 142, which is R_{HI1Emax} at the first end position (i.e., R_{HI1Cmax} > R_{HI1Emax}) and may be referred to as a smallest valley radial dimension or minimum valley radial dimension.

The maximum radial dimension R_{HImax} may, as shown, change gradually moving axially (e.g., having smooth surfaces without steps). For example, the maximum radial dimension R_{HI1max} may decrease at an increasing rate moving axially outward (i.e., toward the first axial end 150a), such as by following a curve having a constant or reducing radius (e.g., a parabolic curve), or may decrease at a constant rate (e.g., following a linear path). Alternatively, the maximum radial dimension R_{HImax} may stay constant moving from the intermediate position to the first axial end (i.e., (i.e., R_{HIMmax} = R_{HI1max}). At the first side position, a difference between the maximum radial dimension R_{HI1Cmax} and the minimum radial dimension R_{HImin} may, for example, be between 2 and 35 microns, or other suitable dimensions.

In the second axially outer region 140e, the maximum radial dimension R_{HImax} of the inner housing surface 144 may reduce in the same or similar manner as in the first axially outer region 140d. The second axially outer region 140e may be symmetric to the first axially outer region 140d, or may be different (e.g., to provide different flow rates, as discussed below). FIG. 5 is a cross-sectional view of the turbocharger 100 taken at a second end position in the second axially outer region 140e of the bore 142 of the bearing housing 140. As shown, the second axial side is on the compressor side of the turbocharger 100 but may instead be on the turbine side of the turbocharger 100.

The second axial end position may be the position where the maximum radial dimension R_{HImax} is least on the second side of the bore 142 (e.g., forming the minimum valley radial dimension). The maximum radial dimension R_{HImax} on the second axial side may reduce (e.g., from a maximum value at another central position adjacent the central region) to its lowest value on the second side of the bore 142, which is R_{HI2Emax} at the second axial end position in the manners described previously (e.g., at increasing or constant rates moving axially toward the second axial end 150b). Alternatively, the maximum radial dimension R_{HImax} may stay constant moving from the intermediate position to the first axial end (i.e., R_{HIMmax} = R_{HI2max}). At the second axial end position, a difference between the maximum radial dimension R_{HI1max} and the minimum radial dimension R_{HImin} may, for example, be between 2 and 35 microns, or other suitable dimensions.

The maximum radial dimension R_{HImax} may be least at the second axial end position as compared to all other axial positions (i.e., R_{HI2Emax} < R_{HI1Emax} <= R_{HIMmax}). As a result of the maximum radial dimension R_{HImax} being least at the second axial position and the minimum radial dimension R_{HImin} staying constant, the cross-sectional area A_{HI} of the inner housing surface 144 may also be lower in the second axially outer region 140e than in the second outer region (A_{HI2} < A_{HI1} <= A_{HIM}). For example, the lowest or minimum cross-sectional area in the first axially outer region 140d may be lower than the lower or minimum cross-sectional area of the inner housing cross-sectional shape in the second axially outer region 140e. Thus, with the outer bearing surface 156 having a constant cross-sectional shape and area (i.e., circular shape with constant diameter moving axially, as discussed below), a net cross-sectional area (i.e., A_{HI} minus A_{BO}) is lower in the second axially outer region 140e than in the first axially outer region 140d. This difference in net cross-sectional area provides that fluid flow (i.e., received into the bore 142 through the fluid passage 146 at an axial position between the first axial position and the second axial position, and flowing axially between the inner housing surface 144 and the outer bearing surface 156) is biased more toward the first axial end 150a than the second axial end 150b.

For example, as shown, the first axial end 150a is positioned near the turbine 110, while the second axial end 150b is positioned near the compressor 120. Thus, with the net cross-sectional area being larger at the first position near the turbine 110 as compared to the second position near the compressor 120, more fluid is biased toward the turbine 110. Biasing more fluid toward the turbine 110 may be desirable to cool components (or portions thereof) proximate the turbine 110 (e.g., a back wall of the turbine housing 112), which may be expected to be relatively hot due to the exhaust gas from the engine flowing therethrough, while less fluid may be biased toward the second axial end 150b to cool components proximate the compressor 120, which are expected to be relatively cool. Alternatively, more fluid may be biased toward the compressor 120 than toward the turbine 110. Fluid exiting axially from between the inner housing surface 144 and the outer bearing surface 156 may be used to cool and/or lubricate still further components of the turbocharger 100 and may ultimately be collected in a sump (not shown) of the bearing housing 140 to be cooled and recirculated to the engine and/or the turbocharger 100.

Alternatively, the maximum radial dimensions R_{HI1Emax}, R_{HI2Emax} and the cross-sectional areas A_{HI1}, A_{HI2} may be the same on each side of the bearing housing 140, such that fluid flow is substantially equal therethrough.

### Journal Bearing Geometry

Referring still to FIGS. 2-5, the outer bearing surface 156 of the journal bearing 150 has a non-variable geometry, while the inner bearing surface 154 of the journal bearing 150 may, in some embodiments, vary in radial dimension moving circumferentially about the axis of the journal bearing 150 and/or moving axially there along. For example, referring again to FIGS. 1 and 2, the journal bearing 150 may include an axially central region 150c (e.g., a non-bearing region) that does not support the shaft 130 (e.g., does not form the inner fluid film interface) and that is axially between first and second axially outer regions 150d, 150e (e.g., bearing regions) that support the shaft 130 by forming the inner fluid film interfaces (e.g., left and right inner fluid film interfaces as shown). The axially central region 150c and the first and second axially outer regions 150d, 150e of the journal bearing 150 may correspond to the axially central region 140c and the first and second axially outer regions 140d, 140e of the bearing housing (e.g., being the generally same in axial length and position), or may differ (e.g., being shorter in axial length). In the axially central region 150c of the journal bearing 150, the inner bearing surface 154 may have an inner dimension and define a cross-sectional area that is larger than dimensions of the first and second axially outer regions 150d, 150e, and may not form the inner fluid film interface (e.g., to not radially support the shaft 130 therein). The radius R_{BIM} in the axially central region 150c may be constant moving circumferentially around the axis 134 (e.g., being circular) and may be constant moving axially there along (e.g., between 25% and 75% of an axial length of the journal bearing 150, such as between 40% and 60% (e.g., approximately 50%). Moving axially from the axially central region 150c to each of the first and second axially outer regions 150d, 150e, the inner bearing surface 154 may change in radial dimension abruptly, such as in a stepped manner.

### Outer Geometry of the Journal Bearing

As referenced above, the outer bearing surface 156 of the journal bearing 150 (e.g., the cross-sectional shape and/or the cross-sectional area thereof, which may be referred to as the outer bearing cross-sectional shape) is circular and cylindrical, such that the outer bearing surface 156 has an outer radial dimension R_{BO} that is the same at generally all angular positions therearound (i.e., being circular) and generally all axial positions there along (i.e., being cylindrical). Thus, at each of the first position and the second positions on the first and second sides of the journal bearing, the journal bearing 150 has an outer bearing cross-sectional area that is circular and common in size.

It should be noted that the journal bearing 150 may include the fluid passage 158a, the circumferential channel 158b, or other surface features that are minor in area (e.g., forming less than 5% of the total surface area of the outer bearing surface 156) in the outer bearing surface 156, while the outer bearing surface 156 is still considered circular and/or cylindrical. With the outer radial dimension R_{BO} of the journal bearing 150 and minimum radial dimension R_{HImin} of the inner housing surface 144 being the same at all axial positions, the outer fluid film interfaces may be formed similarly in the first and second axially outer regions 140d, 140e (e.g., between the peaks 144a of the inner housing surface 144 and the outer bearing surface 156 of the journal bearing 150).

### Circumferentially-Varying Inner Geometry of the Journal Bearing

With the radial dimension of the bore geometry of the journal bearing 150 varying moving circumferentially, the bore geometry may also be referred to as having a circumferentially-varying radial dimension. The result of which is the cross-sectional shape (e.g., the cross-sectional area) of the inner bearing surface 154 being non-circular.

For example, the inner bearing surface 154 (e.g., the cross-sectional shape, or the cross-sectional area thereof, which may be referred to as the inner bearing cross-sectional shape) may include a series of peaks 154a and valleys 154b having smaller and larger radial dimensions, respectively, measured from the axis 134 of rotation of the shaft 130. The radial dimension of the peaks 154a may be referred to as a peak radial dimension or minimum radial dimension, and the radial dimension of the valleys 154b may also be referred to as a valley radial dimension or maximum radial dimension. For example, as shown, the varied radial geometry may include three peaks 154a and three valleys 154b therebetween. The peaks 154a and the valleys 154b may also be referred to as lobes. The peaks 154a and the valleys 154b alternate circumferentially and extend axially over a majority (e.g., an entirety) of the axial distance of the first axially outer region 150d (e.g., between the first axial end 150a and the axially central region 150c of the journal bearing 150, such as on the turbine side) and also the second axially outer region 150e (e.g., between second axial end 150b and the axially central region 150c, such as on the compressor side of the journal bearing 150). As a result, each of the peaks 154a forms an axially-extending ridge and each of the valleys 154b forms an axially-extending trough. The inner fluid film interfaces are formed between the peaks 154a of the inner bearing surface 154 and the outer shaft surface 132 of the shaft 130 (e.g., two inner film interfaces, one in the first axially outer region 150d and another in the second axially outer region 140e).

As shown, the inner bearing surface 154 may include three of the peaks 154a and three of the valleys 154b therebetween, but may include fewer (e.g., two) or more (e.g., four, five, or more). To distinguish from those of the inner housing surface 144, the peaks 154a and the valleys 154b of the inner bearing surface 154 may be referred to as bearing peaks and bearing valleys, respectively, while the peaks 144a and the valleys 144b of the inner housing surface 144 may be referred to as housing peaks and housing valleys, respectively. Alternatively, the inner bearing surface 154 may not vary moving circumferentially (e.g., having a circumferentially non-varying radial dimension), so as to be circular in cross-section at each axial position. For illustrative purposes, the radial dimensions of the journal bearing 150 are depicted in an exaggerated manner, and FIG. 6 superimposes the cross-sectional shape of the various components of the turbocharger 100 to illustrate the different dimensions at different axial positions.

The circumferentially-varying radial dimension of the inner bearing surface 154 may reduce vibrations (e.g., sub-synchronous vibrations), reduce noise, control bearing temperature, increase rotational speed of the shaft 130, and/or increases stability at high rotational speeds of the shaft 130, as compared to conventional geometries of bearing housings and/or journal bearings.

The circumferentially-varying radial dimension may also control flow of the fluid. Referring to FIGS. 7A-7E, the peaks 154a and the valleys 154b of the inner bearing surface 154 may have a constant angular position or may vary as shown for the peaks 144a and the valleys 144b of the inner housing surface 144.

### Axially-Varying Inner Geometry of the Journal Bearing

With the radial dimension of the bore geometry of the journal bearing 150 varying moving axially, the bore geometry of the inner bearing surface 154 (e.g., the inner bearing cross-sectional shape) may also be referred to as having an axially-varying radial dimension. As with varying the bore geometry of the bearing housing 140, by reducing the maximum radial dimension (i.e., of the valleys 154b) moving axially toward the first axial end 150a and the second axial end 150b, greater stability may be provided to the bearing system and reduced noise may be achieved as compared to conventional bearing geometries. The minimum radial dimension (i.e., of the peaks 154a may be constant moving axially). Further by having different smallest dimensions and resultant cross-sectional areas on the turbine and compressor sides unequal biasing of fluid flow may be achieved between the first axial end 150a of the journal bearing 150 and the second axial end 150b of the journal bearing 150. That is, the fluid may flow in an axial direction between the inner bearing surface 154 and the outer shaft surface 132 at uneven flow rates toward the first axial end 150a and the second axial end 150b.

The axially-varying radial dimension and the axially-varying cross-sectional area of the inner bearing surface 154 are illustrated by comparing the cross-sectional views of FIG. 2 (taken in the axially central region 150c), FIG. 3 (taken at a central position in the first axially outer region 150d), FIG. 4 (taken at an end position in the first axially outer region 150d), FIG. 5 (taken at an end position in the second axially outer region 150e), and FIG. 6 (superimposition of the cross-sections of FIGS. 2-5).

Referring again to FIG. 3, at the central position in the first axially outer region 150d, the inner bearing surface 154 has a maximum radial dimension R_{BI1Cmax} measured from the axis 134 at one or more of the valleys 154b (e.g., all) and a minimum radial dimension R_{BImin} at one or more (e.g., all) of the peaks 154a. A difference between the maximum radial dimension R_{BIMmax} and the minimum radial dimension R_{BIMmax} may, for example, be between 25 and 50 microns, or other suitable dimension.

In the first axially outer region 150d, the maximum radial dimension R_{BI1max} (i.e., of the valleys 154b) of the inner bearing surface 154 may be highest at the central position as compared to any other axial position. The maximum radial dimension R_{BIMmax} (i.e., of the valleys 154b) of the inner bearing surface 154 may be highest at the same or different axial position at which the maximum radial dimension R_{BIMmax} of the inner bearing surface 154 is highest (e.g., being closer to one of the first axial end 150a or the second axial end 150b) and may be at the same or different axial position at which the fluid passage 158a is located.

Moving axially from the central position toward the first axial end 150a, the maximum radial dimension R_{BImax} may decrease and/or stay constant. For example, as shown, the maximum radial dimension R_{BImax} decreases moving from the central position toward both the first axial end.

The minimum radial dimension R_{BImin} of the inner bearing surface 154 may, as shown, be constant over the axial distance of the journal bearing 150 (i.e., be the same at each axial position there along).

As a result of the maximum radial dimension R_{BImax} being highest at the central position and the minimum radial dimension R_{BImin} staying constant, the cross-sectional area A_{BI} of the inner bearing surface 154 (e.g., the inner bearing cross-sectional area) in the first axially outer region 150d may also be highest at the central position. Further, as a result of the maximum radial dimension R_{BImax} decreasing moving from the central position and the minimum radial dimension R_{HImin} staying constant, the cross-sectional area A_{BI} defined within the inner bearing surface 154 decreases moving from the central axial position axially toward the first axial end 150a. Thus, the cross-sectional area of the inner bearing surface 154 varies in size between the central position and the end position in the first axially outer region 150d (e.g., bearing region).

Referring again to FIG. 4, the maximum radial dimension R_{BImax} of the inner bearing surface 154 may be lowest in the first axially outer region 150d at the end position. The maximum radial dimension R_{BImax} of the inner bearing surface 154 reduces from its greatest value R_{BIMmax} at the central position to its lowest value on the first axially outer region 150d, which is R_{HI1Emax} at the first axial position (i.e., R_{BIMmax} > R_{BI1Emax}).

The maximum radial dimension R_{BImax} may, as shown, change gradually moving axially. For example, the maximum radial dimension may decrease at an increasing rate moving axially outward (i.e., toward the first axial end 150a), such as by following a curve having a constant or reducing radius (e.g., a parabolic curve), or may decrease at a constant rate (e.g., following a linear path). Alternatively, the maximum radial dimension R_{HImax} may stay constant moving from the intermediate position to the first axial end (i.e., R_{BIMmax} = R_{BI1max}). The maximum radial dimension R_{BI1Emax} (i.e., of the valleys 154b) of the inner bearing surface 154 may be at the same or different axial position at which the maximum radial dimension R_{HI1Emax} of the inner housing surface 144 is least on the first axial side (e.g., being closer to or further from the first axial end 150a). At the first end position, a difference between the maximum radial dimension R_{HI1max} and the minimum radial dimension R_{HImin} may, for example, be between 2 and 35 microns, or other suitable dimensions.

In the second axially outer region 150e, the maximum radial dimension R_{HBmax} of the inner bearing surface 154 may reduce in the same or similar manner as in the first axially outer region 150d, or may differ (e.g., to provide uneven flow rates as discussed below). Referring again to FIG. 5, the maximum radial dimension R_{BImax} of the inner bearing surface 154 may be lowest on the second axially outer region 150e at the end position (e.g., at or adjacent the second axial end 150b). Alternatively, the maximum radial dimension R_{HImax} may stay constant moving from the intermediate position to the second axial end (i.e., R_{BI2Mmax} = R_{BI2Emax}). The maximum radial dimension R_{BI2Emax} (i.e., of the valleys 154b) of the inner bearing surface 154 may be at the same or different axial position at which the maximum radial dimension R_{HI2Emax} of the inner housing surface 144 is least on the second axial side (e.g., being closer to or further from the second axial end 150b). At the second side position, a difference between the maximum radial dimension R_{HI2max} and the minimum radial dimension R_{HImin} may, for example, be between 2 and 35 microns, or other suitable dimension.

The maximum radial dimension R_{BImax} of the inner bearing surface 154 may be lowest at the end position as compared to all other axial positions (i.e., R_{BI2Emax} < R_{BI1Emax} <= R_{BIMmax}) in the first and second axially outer regions 150d, 150e. As a result of the maximum radial dimension R_{BImax} being least at the end position and the minimum radial dimension R_{BImin} staying constant, the cross-sectional area A_{BI} of the inner bearing surface 154 may also be lower in second axially outer region 150e than the first axially outer region 150d. Thus, with the outer shaft surface 132 having a constant cross-sectional shape and size (i.e., circular shape with constant diameter, as discussed below), a net cross-sectional area (i.e., A_{BI} minus Aso) is lower in the second axially outer region 150e than in the first axially outer region 150d. This difference in net cross-sectional area provides that fluid flow (e.g., received into the bore 152 through the fluid passage 158a at an axial position between the first axial position and the second axial position, and flowing axially between the inner bearing surface 154 and the outer shaft surface 132) is biased more toward the first axial end 150a than the second axial end 150b. Thus, more fluid is biased toward the first axial end 150a (e.g., toward the turbine 110) than the second axial end 150b (e.g., toward the compressor 120) both between the inner housing surface 144 and the outer bearing surface 156 and between the inner bearing surface 154 and the outer shaft surface 132.

Alternatively, the maximum radial dimension R_{BImax} of the inner bearing surface 154 may be lowest on the opposite side from which the maximum radial dimension R_{BImax} of the inner housing surface 144 is lowest. As a result, more fluid is biased toward the first axial end 150a than the second axial end 150b between the inner housing surface 144 and the outer bearing surface 156, and more fluid is biased toward the second axial end 150b than the first axial end 150a between the inner bearing surface 154 and the outer shaft surface 132, or vice versa.

As referenced above, the shaft 130 has a geometry that does not vary in radial dimension moving circumferentially or axially in regions where the second fluid film interface is formed. That is, the outer surface of the shaft 130 does not vary radially (i.e., is circular) or axially (i.e., is cylindrical) in the axial region coinciding with the journal bearing 150.

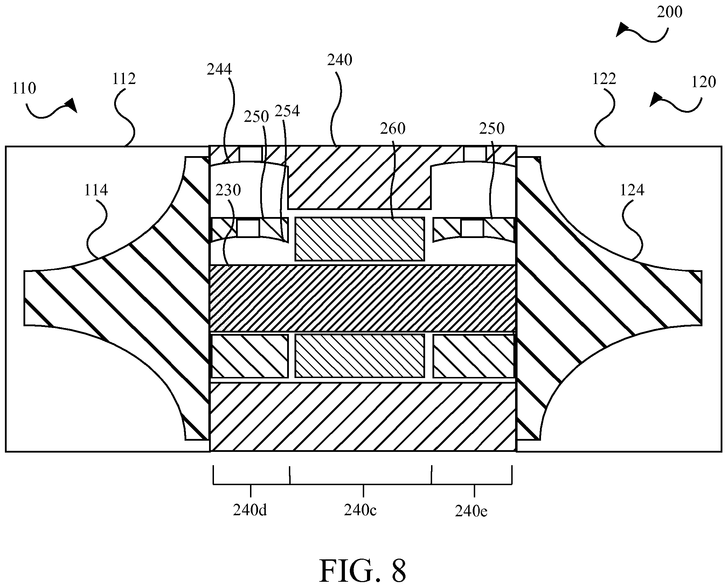

Referring to FIG. 8, a turbocharger 200 may be configured substantially similar to the turbocharger 100 but instead includes two journal bearings 250 (e.g., floating rings or floating journal bearings) that are spaced apart axially along the shaft 130 with a spacer ring 260 (e.g., spacer member) arranged therebetween. In a first axially outer region 240d, the inner housing surface 244 of a bearing housing 240 varies in radial dimension moving both circumferentially (e.g., having peaks and valleys as described above) and axially. For example, the maximum radial dimension (e.g., the valley radial dimension) may be greatest in a central position (e.g., at an axial midpoint of a corresponding one of the journal bearings 250) and reduce therefrom moving axially toward the turbine and toward a central region 240c corresponding to the spacer ring 260. An oil flow passage may be arranged at the axial position corresponding to the greatest maximum radial dimension (e.g., the midpoint). Moving from this midpoint, the maximum radial dimension reduces gradually to both axial ends thereof (e.g., following a curve, such as a parabola, or a line, as described previously). The inner housing surface 244 may be symmetric in the first axially outer region 240d about the midpoint, or may be asymmetric (e.g., having different maximum radial dimensions on each side to bias fluid flow unequally to each side thereof, or by having the maximum radial dimension located off-center). The minimum radial dimension (e.g., of the peaks) may be constant moving axially. The fluid film interface (e.g., the outer fluid film interface) may be formed over the entire axial length of the journal bearing 250. Each of the journal bearings 250 may have an outer bearing surface with a constant outer diameter moving both circumferentially and axially.

In a second axially outer region 240e (i.e., opposite the first axially outer region 240d with the central region 240c arranged therebetween), the inner housing surface 244 may be symmetric to the first axially outer region 240d.

Each of the journal bearings 250 may also be configured in the manners described above with respect to the journal bearing 150 by having an inner bearing surface 254 with a cross-sectional shape that varies in radial dimension moving circumferentially (e.g., for vibrations, etc.) and moving axially (e.g., for stability and/or to control fluid flow therethrough). The maximum radial dimension (e.g., the valley dimension) may be greatest in the central position (e.g., at an axial midpoint thereof) and reduce therefrom moving axially toward the turbine (or compressor) and toward the spacer ring 260. Oil flow passages through the journal bearing 250 may be arranged at the same axial position as the oil flow passage of the bearing housing, and the journal bearing 250 may additionally include a circumferential channel corresponding thereto to ensure communication between the oil passage of the bearing housing 240 as the journal bearing rotates relative thereto. Moving axially from the midpoint, the maximum radial dimension reduces gradually to both axial ends thereof (e.g., following a curve, such as a parabola, or line as described previously). The inner bearing surface 254 may be symmetric about the midpoint, or may be asymmetric (e.g., having different maximum radial dimensions on each side thereof to bias fluid flow unequally to each side thereof, or by having the maximum radial dimension located off-center). The minimum radial dimension may be constant moving axially. The fluid film interface (e.g., the inner fluid film interface) may be formed over the entire axial length of the journal bearing 250.

A second of the journal bearings 250 may be a duplicate of a first of the journal bearing 250.

The spacer ring 260 is configured as a ring arranged between the two journal bearings 250. The spacer ring 260 is able to rotate independent of the two journal bearings 250, the shaft 230, and the bearing housing 240. The spacer ring 260 does not support the shaft 230 (e.g., does not form fluid film interfaces therebetween).

The bearing housings 140, 240 and the journal bearing 150, 250 and, particularly, the bore geometries of the inner housing surfaces 144, 244 and the inner bearing surface 154, 254, respectively thereof, may be formed according to any suitable method. A machine, such as a magnetically levitated machine tool and spindle assembly, may apply a rotating cutting tool to the inner surface at suitable axial and radial trajectories in a milling or boring fashion to form the bore geometry thereof. The bearing housing 140 and the journal bearing 150 may be moved axially relative to the cutting tool. For example, the inner housing surface 144 and/or the inner bearing surface 154 may be formed according to the method and with the machine 300 described in US Patent No. 9,777,597.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A turbocharger (100, 200) comprising:
a compressor wheel (124);
a shaft (130) coupled to the compressor wheel (124);
a bearing housing (140, 240) through which the shaft (130) extends, and which includes an inner housing surface (144, 244) extending circumferentially around an axis of the shaft (130), wherein the inner housing surface (144, 244) comprises an axially central region surrounded by first and second axially outer regions;
a floating ring (150, 250) that rotatably supports the shaft (130) in the bearing housing (140, 240) and which rotates relative to the bearing housing (140, 240) and the shaft (130), the floating ring (150, 250) having an outer bearing surface (156) that extends circumferentially around the axis and that faces the inner housing surface (144, 244);
**characterized in that** the inner housing surface (144, 244) has a geometry that varies in radial dimension moving circumferentially about the axis of the bearing housing (140, 240) and also moving axially there along, wherein the inner housing surface (144, 244) is formed of a rigid material and has an inner housing cross-sectional shape that in the first axially outer region of the inner housing surface (144, 244) is non-circular perpendicular to the axis, decreases in area moving axially toward a first axial end of the floating ring (150, 250), and forms a first outer fluid film interface with the outer bearing surface (156) of the floating ring (150, 250), and
**in that** the inner housing cross-sectional shape includes peaks (144a) and valleys (144b) that extend axially toward the first axial end, wherein in the first axially outer region, the peaks have a peak radial dimension measured from the axis that is constant moving axially toward the first axial end, and the valleys have a valley radial dimension measured from the axis that is greater than the peak radial dimension and that reduces moving axially toward the first axial end.

2. The turbocharger (100, 200) according to claim 1, wherein the second axially outer region is positioned axially opposite the first axially outer region, wherein the inner housing cross-sectional shape in the second axially outer region is non-circular perpendicular to the axis, decreases in area moving axially toward a second axial end of the floating ring (150, 250), and forms a second outer fluid film interface with the outer bearing surface (156) of the floating ring (150, 250).

3. The turbocharger (100, 200) according to claim 2, wherein the axially central region is between the first axially outer region and the second axially outer region, wherein the inner housing cross-sectional shape is greater area in the axially central region than in each of the first axially outer region and the second axially outer region.

4. The turbocharger (100, 200) according to claim 3, wherein the inner housing surface (144, 244) does not form a fluid film interface with the outer bearing surface (156) in the axially central region.

5. The turbocharger (100, 200) according to any of claims 3-4, wherein the area of the inner housing cross-sectional shape reduces in a stepped manner moving axially from the axially central region to each of the first axially outer region and the second axially outer region.

6. The turbocharger (100, 200) according to claim 5, wherein in each of the first axially outer region and the second axially outer region, a maximum radial dimension decreases gradually, and a minimum radial dimension is constant moving axially away from the axially central region.

7. The turbocharger (100, 200) according to any of claim 3-6, wherein the bearing housing (140, 240) includes a fluid passage having an outlet through which fluid enters the bearing housing (140, 240), the outlet being located in the axially central region of the inner housing surface (144, 244).

8. The turbocharger (100, 200) according to any of claims 2-7, wherein the inner housing cross-sectional shape includes a first minimum cross-sectional area in the first axially outer region and a second minimum cross-sectional area in the second axially outer region, the first minimum cross-sectional area being less than the second minimum cross-sectional area.

9. The turbocharger (100, 200) according to any of the preceding claims, wherein the outer bearing surface (156) extends circumferentially around the axis and has a radial dimension that is constant in an outer region of the floating ring (150, 250) that corresponds to the first axially outer region of the inner housing surface (144, 244).

10. The turbocharger (100, 200) according to claim 9, wherein the shaft (130) includes an outer shaft surface (132) and the floating ring (150, 250) includes an inner bearing surface (154) having an inner bearing cross-sectional shape that is non-circular perpendicular to the axis, an inner fluid film interface being formed between the outer shaft surface (132) and the inner bearing surface (154).

11. The turbocharger (100, 200) according to claim 10, wherein the inner bearing cross-sectional shape reduces in area moving toward the first axial end.

12. The turbocharger (100, 200) according to any of claims 10-11, wherein the inner bearing cross-sectional shape includes peaks and valleys, the peaks having a peak radial dimension measured from an axis of the floating ring (150, 250), and the valleys having a valley radial dimension measured from the axis that is greater than the peak radial dimension and that reduces moving toward the first axial end.

13. The turbocharger (100, 200) according to any of the preceding claims, further comprising:
a turbine (110) having a turbine housing (112) and a turbine wheel (114) in the turbine housing (112);
a compressor housing with the compressor wheel (124) in the compressor housing, the turbine wheel (114) being rotatably coupled to the compressor wheel (124) with the shaft (130).

14. The turbocharger (100, 200) according to claim 13, further comprising another floating ring (150, 250) positioned radially between and rotatable independent of the inner housing surface (144, 244) and the shaft (130), and positioned axially between the turbine (110) and the floating ring (150, 250), wherein another outer fluid film interface is formed between the inner housing surface (144, 244) and another outer bearing surface (156) of the other floating ring (150, 250); and
further comprising a spacer ring (260) positioned that is axially between the floating ring (150, 250) and the other floating ring (150, 250).

## Patentansprüche

1. Turbolader (100, 200), umfassend:
ein Verdichterrad (124);
eine mit dem Verdichterrad (124) gekoppelte Welle (130);
ein Lagergehäuse (140, 240), durch das sich die Welle (130) erstreckt und das eine innere Gehäusefläche (144, 244) aufweist, die sich in Umfangsrichtung um eine Achse der Welle (130) erstreckt, wobei die innere Gehäusefläche (144, 244) einen axial zentralen Bereich aufweist, der durch einen ersten und zweiten axial äußeren Bereich umgeben ist;
einen schwimmenden Ring (150, 250), der die Welle (130) in dem Lagergehäuse (140, 240) drehbar lagert und der sich relativ zu dem Lagergehäuse (140, 240) und der Welle (130) dreht, wobei der schwimmende Ring (150, 250) eine äußere Lagerfläche (156) aufweist, die sich in Umfangsrichtung um die Achse herum erstreckt und die der inneren Gehäusefläche (144, 244) gegenüberliegt;
**dadurch gekennzeichnet, dass** die innere Gehäusefläche (144, 244) eine Geometrie aufweist, deren radiale Abmessung sich in Umfangsrichtung um die Achse des Lagergehäuses (140, 240) und sich auch axial entlang dieser bewegend ändert, wobei die innere Gehäusefläche (144, 244) aus einem starren Material gebildet ist und eine innere Gehäusequerschnittsform aufweist, die in dem ersten axial äußeren Bereich der inneren Gehäusefläche (144, 244) rechtwinklig zur Achse nicht kreisförmig ist, sich axial auf ein erstes axiales Ende des schwimmenden Rings (150, 250) zu bewegend flächenmäßig abnimmt und mit der äußeren Lagerfläche (156) des schwimmenden Rings (150, 250) eine erste äußere Fluidfilmgrenzfläche bildet, und
dass die innere Gehäusequerschnittsform Höhen (144a) und Täler (144b) aufweist, die sich axial auf das erste axiale Ende zu erstrecken, wobei in dem ersten axial äußeren Bereich die Höhen eine radiale Höhenabmessung von der Achse aus gemessen aufweisen, die sich axial auf das erste axiale Ende zu bewegend konstant ist, und die Täler eine radiale Talabmessung von der Achse aus gemessen aufweisen, die größer als die radiale Höhenabmessung ist und die sich axial auf das erste axiale Ende zu bewegend verringert.

2. Turbolader (100, 200) gemäß Anspruch 1, wobei der zweite axial äußere Bereich axial gegenüber dem ersten axial äußeren Bereich positioniert ist, wobei die innere Gehäusequerschnittsform in dem zweiten axial äußeren Bereich nicht kreisförmig rechtwinklig zur Achse ist, sich axial auf ein zweites axiales Endes des schwimmenden Rings (150, 250) zu bewegend flächenmäßig abnimmt, und eine zweite äußere Fluidfilmgrenzfläche mit der äußeren Lagerfläche (156) des schwimmenden Rings (150, 250) bildet.

3. Turbolader (100, 200) gemäß Anspruch 2, wobei der axial zentrale Bereich zwischen dem ersten axial äußeren Bereich und dem zweiten axial äußeren Bereich liegt, wobei die innere Gehäusequerschnittsform im axial zentralen Bereich eine größere Fläche als in jeweils dem ersten axial äußeren Bereich und dem zweiten axial äußeren Bereich aufweist.

4. Turbolader (100, 200) gemäß Anspruch 3, wobei die innere Gehäusefläche (144, 244) im axial mittleren Bereich keine Fluidfilmgrenzfläche mit der äußeren Lagerfläche (156) bildet.

5. Turbolader (100, 200) gemäß einem der Ansprüche 3-4, wobei sich die Fläche der inneren Gehäusequerschnittsform in axialer Richtung vom axial mittleren Bereich jeweils zum ersten axial äußeren Bereich und zweiten axial äußeren Bereich stufenförmig verringert.

6. Turbolader (100, 200) gemäß Anspruch 5, wobei im ersten axial äußeren Bereich und zweiten axial äußeren Bereich jeweils eine maximale radiale Abmessung allmählich abnimmt, und sich axial vom axial zentralen Bereich weg bewegend eine minimale radiale Abmessung konstant ist.

7. Turbolader (100, 200) gemäß einem der Ansprüche 3 bis 6, wobei das Lagergehäuse (140, 240) einen Fluiddurchlass mit einem Auslass aufweist, durch den Fluid in das Lagergehäuse (140, 240) eintritt, wobei der Auslass im axial zentralen Bereich der inneren Gehäusefläche (144, 244) angeordnet ist.

8. Turbolader (100, 200) gemäß einem der Ansprüche 2-7, wobei die innere Gehäusequerschnittsform eine erste minimale Querschnittsfläche in dem ersten axial äußeren Bereich und eine zweite minimale Querschnittsfläche in dem zweiten axial äußeren Bereich aufweist, wobei die erste minimale Querschnittsfläche kleiner als die zweite minimale Querschnittsfläche ist.

9. Turbolader (100, 200) gemäß einem der vorhergehenden Ansprüche, wobei sich die äußere Lagerfläche (156) in Umfangsrichtung um die Achse erstreckt und eine radiale Abmessung aufweist, die in einem äußeren Bereich des schwimmenden Rings (150, 250), der dem ersten axial äußeren Bereich der inneren Gehäusefläche (144, 244) entspricht, konstant ist.

10. Turbolader (100, 200) gemäß Anspruch 9, wobei die Welle (130) eine äußere Wellenfläche (132) aufweist und der schwimmende Ring (150, 250) eine innere Lagerfläche (154) mit einer inneren Lagerquerschnittsform aufweist, die nicht kreisförmig rechtwinklig zur Achse ist, wobei eine innere Fluidfilmgrenzfläche zwischen der äußeren Wellenfläche (132) und der inneren Lagerfläche (154) gebildet wird.

11. Turbolader (100, 200) gemäß Anspruch 10, wobei die innere Lagerquerschnittsform in Richtung des ersten axialen Endes flächenmäßig abnimmt.

12. Turbolader (100, 200) gemäß einem der Ansprüche 10 bis 11, wobei die innere Lagerquerschnittsform Höhen und Täler aufweist, wobei die Höhen eine radiale Höhenabmessung von einer Achse des schwimmenden Rings (150, 250) aus gemessen aufweisen und die Täler eine radiale Talabmessung von der Achse aus gemessen aufweisen, die größer als die radiale Höhenabmessung ist und die sich auf das erste axiale Ende zu bewegend verringert.

13. Turbolader (100, 200) gemäß einem der vorhergehenden Ansprüche, ferner umfassend:
eine Turbine (110) mit einem Turbinengehäuse (112) und einem Turbinenrad (114) in dem Turbinengehäuse (112);
ein Verdichtergehäuse mit dem Verdichterrad (124) im Verdichtergehäuse, wobei das Turbinenrad (114) mit dem Verdichterrad (124) über die Welle (130) drehbar gekoppelt ist.

14. Turbolader (100, 200) gemäß Anspruch 13, ferner umfassend einen weiteren schwimmenden Ring (150, 250), der radial zwischen der inneren Gehäusefläche (144, 244) und der Welle (130) positioniert und unabhängig davon drehbar ist und der axial zwischen der Turbine (110) und dem schwimmenden Ring (150, 250) positioniert ist, wobei eine weitere äußere Fluidfilmgrenzfläche zwischen der inneren Gehäusefläche (144, 244) und einer weiteren äußeren Lagerfläche (156) des anderen schwimmenden Rings (150, 250) gebildet wird; und
ferner umfassend einen Distanzring (260), der axial zwischen dem schwimmenden Ring (150, 250) und dem anderen schwimmenden Ring (150, 250) angeordnet ist.

## Revendications

1. Turbocompresseur (100, 200) comprenant :
une roue de compresseur (124) ;
un arbre (130) accouplé à la roue de compresseur (124) ;
un carter de palier (140, 240) à travers lequel l'arbre (130) s'étend, et qui comprend une surface de carter interne (144, 244) s'étendant de manière circonférentielle autour d'un axe de l'arbre (130), la surface de carter interne (144, 244) comprenant une région axialement centrale entourée par des première et seconde régions axialement externes ;
un anneau flottant (150, 250) qui supporte de manière rotative l'arbre (130) dans le carter de palier (140, 240) et qui tourne par rapport au carter de palier (140, 240) et à l'arbre (130), l'anneau flottant (150, 250) ayant une surface de palier externe (156) qui s'étend circonférentiellement autour de l'axe et qui fait face à la surface de carter interne (144, 244) ;
**caractérisé en ce que** la surface de carter interne (144, 244) a une géométrie qui varie en dimension radiale en se déplaçant circonférentiellement autour de l'axe du carter de palier (140, 240) et également en se déplaçant axialement le long de celui-ci, la surface de carter interne (144, 244) étant formée d'un matériau rigide et ayant une forme en section transversale du carter interne qui, dans la première région axialement externe de la surface de carter interne (144, 244) est non circulaire perpendiculairement à l'axe, diminue en surface en se déplaçant axialement vers une première extrémité axiale de l'anneau flottant (150, 250), et forme une première interface de film fluide externe avec la surface de palier externe (156) de l'anneau flottant (150, 250), et
**en ce que** la forme en section transversale du carter interne comprend des pics (144a) et des vallées (144b) qui s'étendent axialement vers la première extrémité axiale, dans la première région axialement externe, les pics ayant une dimension radiale de pic mesurée à partir de l'axe qui est constante en se déplaçant axialement vers la première extrémité axiale, et les vallées ayant une dimension radiale de vallée mesurée à partir de l'axe qui est supérieure à la dimension radiale de pic et qui diminue en s'approchant axialement de la première extrémité axiale.

2. Turbocompresseur (100, 200) selon la revendication 1, la seconde région axialement externe étant positionnée axialement à l'opposé de la première région axialement externe, dans lequel la forme en section transversale du carter interne dans la seconde région axialement externe est non circulaire perpendiculairement à l'axe, diminue en surface en se déplaçant axialement vers une seconde extrémité axiale de l'anneau flottant (150, 250), et forme une seconde interface de film fluide externe avec la surface de palier externe (156) de l'anneau flottant (150, 250).

3. Turbocompresseur (100, 200) selon la revendication 2, la région axialement centrale étant entre la première région axialement externe et la seconde région axialement externe, la forme en section transversale du carter interne étant une surface plus grande dans la région axialement centrale que dans chacune de la première région axialement externe et de la seconde région axialement externe.

4. Turbocompresseur (100, 200) selon la revendication 3, la surface de carter interne (144, 244) ne formant pas une interface de film fluide avec la surface de palier externe (156) dans la région axialement centrale.

5. Turbocompresseur (100, 200) selon l'une quelconque des revendications 3 et 4, la surface de la forme en section transversale du carter interne diminuant de manière étagée en se déplaçant axialement depuis la région axialement centrale vers chacune de la première région axialement externe et de la seconde région axialement externe.

6. Turbocompresseur (100, 200) selon la revendication 5, dans chacune de la première région axialement externe et de la seconde région axialement externe, une dimension radiale maximale diminuant progressivement, et une dimension radiale minimale étant constante en s'éloignant axialement de la région axialement centrale.

7. Turbocompresseur (100, 200) selon l'une quelconque des revendications 3 à 6, le carter de palier (140, 240) comprenant un passage de fluide ayant une sortie à travers laquelle le fluide entre dans le carter de palier (140, 240), la sortie étant située dans la région axialement centrale de la surface de carter interne (144, 244).

8. Turbocompresseur (100, 200) selon l'une quelconque des revendications 2 à 7, la forme en section transversale du carter interne comprenant une première surface de section transversale minimale dans la première région axialement externe et une seconde surface de section transversale minimale dans la seconde région axialement externe, la première surface de section transversale minimale étant inférieure à la seconde surface de section transversale minimale.

9. Turbocompresseur (100, 200) selon l'une quelconque des revendications précédentes, la surface de palier externe (156) s'étendant circonférentiellement autour de l'axe et ayant une dimension radiale constante dans une région externe de l'anneau flottant (150, 250) qui correspond à la première région axialement externe de la surface de carter interne (144, 244).

10. Turbocompresseur (100, 200) selon la revendication 9, l'arbre (130) comprenant une surface d'arbre externe (132) et l'anneau flottant (150, 250) comprenant une surface de palier interne (154) ayant une forme en section transversale du palier interne qui est non circulaire perpendiculaire à l'axe, une interface de film fluide interne étant formée entre la surface d'arbre externe (132) et la surface de palier interne (154).

11. Turbocompresseur (100, 200) selon la revendication 10, la surface de la forme en section transversale du palier interne diminuant en se déplaçant vers la première extrémité axiale.

12. Turbocompresseur (100, 200) selon l'une quelconque des revendications 10 et 11, la forme en section transversale du palier interne comprenant des pics et des vallées, les pics ayant une dimension radiale de pic mesurée à partir d'un axe de l'anneau flottant (150, 250), et les vallées ayant une dimension radiale de vallée mesurée à partir de l'axe qui est supérieure à la dimension radiale de pic et qui diminue en s'approchant de la première extrémité axiale.

13. Turbocompresseur (100, 200) selon l'une quelconque des revendications précédentes, comprenant en outre :
une turbine (110) ayant un carter de turbine (112) et une roue de turbine (114) dans le carter de turbine (112) ;
un carter de compresseur avec la roue de compresseur (124) dans le carter de compresseur, la roue de turbine (114) étant accouplée de manière rotative à la roue de compresseur (124) avec l'arbre (130).

14. Turbocompresseur (100, 200) selon la revendication 13, comprenant en outre un autre anneau flottant (150, 250) positionné radialement entre la surface de carter interne (144, 244) et l'arbre (130) et pouvant tourner indépendamment de ceux-ci, et positionné axialement entre la turbine (110) et l'anneau flottant (150, 250), une autre interface de film de fluide externe étant formée entre la surface de carter interne (144, 244) et une autre surface de palier externe (156) de l'autre anneau flottant (150, 250) ; et
comprenant en outre un anneau d'espacement (260) positionné qui est axialement entre l'anneau flottant (150, 250) et l'autre anneau flottant (150, 250).
